# DEMANDE DE BREVET EUROPEEN

(11) **EP 0 891 925 A1**
(43) Date de publication de la demande: **20.01.1999**
(21) Numéro de dépôt: 98870146.2
(22) Date de dépôt: 03.07.1998
(51) Int. Cl.: B64C 21/00, B64C 9/22

(54) **Aile d'aéronef pourvue d'un profilé auxiliaire mobile**

(30) Priorité: 18.07.1997 BE 9700628
(71) Demandeur: Chavagne, Jean, 5081 La bruyere (BE)
(72) Inventeur: Chavagne, Jean, 5081 La bruyere (BE)
(74) Mandataire: Goegebeur, Erik

(57) **Abrégé**

L'invention a trait à un petit profilé auxiliaire (2) adapté à l'aile (1) et disposé en extrados. Celui-ci se trouve à la hauteur ou un peu en avant du point de cambrure maximum de l'aile et à une certaine distance de l'aile en dehors de la couche limite. Il présente un profil aérodynamique. Il est monté de façon mobile et réglable au moyen de vérins (4,5,7) dans sa position vis-à-vis de l'aile. Ce profilé est destiné à influencer l'écoulement de la couche limite de l'aile en extrados et en intrados car en contournant le profile, les filets d'air se trouvant en dehors de la couche limite augmentent leur vitesse et leur énergie cinétique et viennent pénétrer et influencer la couche limite de l'aile.

## Description

L'invention a trait à une aile d'aéronef, pourvue d'un profilé auxiliaire mobile disposé en extrados dont la position vis-à-vis de l'aile est réglable et ayant un profil aérodynamique. La demande de brevet belge 096 00654 décrit une aile d'aéronef pourvue d'un profilé auxiliaire mobile dont la forme présente un bord d'attaque effilé et un bord de fuite arrondi.

Il est cependant apparu lors d'essais en soufflerie qu'il est avantageux de disposer d'un profilé auxiliaire ayant un bord d'attaque arrondi ou effilé en amont et un bord de fuite effilé en aval.

Une aile d'aéronef à profil asymétrique est soumise à plusieurs pressions lors de son déplacement, aussi bien le long de son extrados que de son intrados.

En considérant une aile volant à un angle d'attaque modéré, nous constatons la présence d'une dépression en extrados et d'une surpression en intrados.

Ces différences de pression provoquent l'upwash (transfert des filets d'air le long du bord d'attaque de l'aile). Le downwash est produit par le mouvement des filets d'air qui, en quittant le bord de fuite de l'aile, continuent à suivre la courbure de l'extrados de l'aile.

Sur le bord d'attaque existe un endroit où l'air stagne. Ce point change en même temps que l'angle d'attaque de l'aile.

En analysant l'écoulement des filets d'air dans la couche limite, nous constatons qu'au point d'arrêt où l'air stagne, la pression y est maximale et égale à la pression totale; la vitesse y est nulle. A partir de ce point, la vitesse des filets d'air s'écoulant en extrados augmente de vitesse et la pression diminue. Jusqu'au point de transition,
la couche limite reste laminaire tant que le nombre de reynolds reste inférieur au nombre de reynolds critique (Rc). Pour ce dernier, le point de transition est atteint et la couche limite devient turbulente. Elle s'épaissit au fur et à mesure le long du profil, les filets d'air au sein de la couche limite sont désordonnés.

A partir du point de séparation, la couche limite décolle de l'extrados à cause de la modification du profil de vitesse au sein de celle-ci.

Une fois dépassé un certain angle d'attaque, ce décollement de la couche limite remonte le long de l'extrados vers le bord d'attaque et l'aile produit de moins en moins de portance (lift). En outre, la résistance aérodynamique devient plus importante.

En aval du bord de fuite se créent des remous qui, combinés avec l'effet downwash, perturbent et influencent l'écoulement de l'air le long des plans stabilisateurs situés en aval de l'aile.

Le principe peut être adapté à tout objet soumis à un écoulement d'air lorsque l'on veut influencer la portance et la résistance aérodynamique.

Pour incliner l'aéronef autour de son axe de roulis et permettre le contrôle de l'aéronef, il faut créer une dissymétrie de portance entre une aile de l'avion et l'autre.

L'angle d'attaque, par rapport au vent relatif, est réglable car le profilé auxiliaire est monté de façon mobile et réglable au moyen de vérins dans sa position vis-à-vis de l'aile. Ce profilé auxiliaire est destiné à influencer l'écoulement au sein de la couche limite de l'aile en extrados et en intrados car, en contournant le profilé auxiliaire, la vitesse des filets d'air se trouvant en dehors de la couche limite de l'aile augmente et ceux-ci viennent pénétrer et influencer la couche limite de l'aile.

Les objectifs sont les suivants :
- Rendre la couche limite laminaire plus longue de façon à ce que le point de transition soit rejeté le plus loin possible du bord d'attaque afin de diminuer la résistance de frottement.
- Augmenter l'énergie cinétique du fluide en aval du point de transition.
- Reculer l'éventuel point de décollement de la couche limite vers le bord de fuite en vue de diminuer la traînée de forme de l'obstacle.
- Influencer l'écoulement des filets d'air, suivant les besoins, autour de l'aile de façon à modifier le profil de pression autant en extrados qu'en intrados.
- Réduire, suivant les besoins le couple piqueur (Cm) de l'aile.

En adaptant l'angle d'attaque du profilé auxiliaire, son écartement ainsi que sa position par rapport à l'aile, on peut faire varier la portance et la résistance aérodynamique.

En adaptant l'angle d'attaque des profilés auxiliaires, leur écartement ainsi que leur position d'une aile par rapport à l'autre aile, l'on peut faire varier la portance et la résistance aérodynamique de l'une par rapport à l'autre.

Si l'on ne désire pas utiliser le profilé auxiliaire, ce dernier peut être logé dans l'aile.

Figure 1 - vue schématique du profil d'une aile d'aéronef et du profil correcteur.

Figure 2 - écoulement des filets d'air autour d'une aile sans profilé correcteur.

Figure 3 - écoulement des filets d'air autour d'une aile pourvu d'un profilé correcteur.

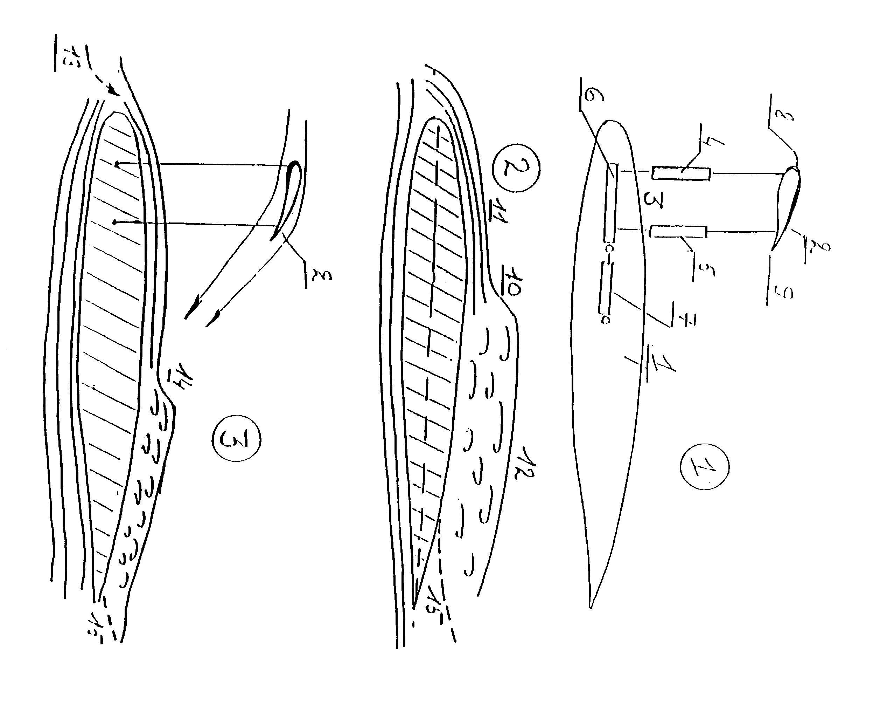

La figure 1 représente l'aile 1 d'un aéronef pourvu d'un profilé auxiliaire 2 - disposé au dessus de la partie avant 3 de l'extrados de l'aile. Le profilé est relié à l'aile au moyen de deux vérins verticaux 4-5, placés sur un élément de guidage 6, mobile dans un plan parallèle à la corde de l'aile 1. L'élément mobile 6 est contrôlé par un troisième vérin 7. Le profilé 2 à la forme d'une aile d'avion ou encore d'une aube de turbine et sa position par rapport à l'aile peut être réglée en fonction de la vitesse de l'avion et des performances de vol souhaitées.

Les vérins verticaux 4-5 assurent par un mouvement synchrone le déplacement vertical du profilé auxiliaire et son positionnement à une distance choisie par rapport à l'aile 1.

De même, ces vérins 4-5 par des mouvements inégaux assurent le pivotement du profilé 2 autour d'un axe longitudinal. Le vérin 7 assure le mouvement de l'élément de guidage mobile 6, portant les vérins verticaux 4-5 dans une direction parallèle à la corde de l'aile permettant ainsi de déplacer le profilé 2 dans cette même direction.

L'action de ces trois vérins 4-5-7 permet d'adapter la position du profilé et son angle d'attaque en fonction du vol et des performances souhaitées.

La figure 2 représente une aile sans profilé et l'écoulement des filets d'air.
En extrados le point de transition 10 entre la zone d'écoulement laminaire 11 et la zone de turbulence 12 se trouve relativement avancé sur l'extrados. Les turbulences sont fortes et irrégulières. La surpression au niveau du bord d'attaque est forte ainsi que l'upwash.

La figure 3 représente une aile pourvue d'un profilé correcteur 2 réglable. Le point de transition 14 est reculé en arrière de l'extrados et les turbulences sont moindres. L'upwash 13 est plus faible. Le point de séparation 15 se situe plus près du bord de fuite.

Le profilé peut être adapté à d'autres types de profil aérodynamique, tel qu'utilisé sur des voitures, motos ou tout véhicule se déplaçant à haute vitesse.

Pour incliner l'aéronef autour de son axe de roulis et permettre le contrôle de l'aéronef, il faut créer une dissymétrie de portance entre une aile de l'avion et l'autre. Ceci peut se faire par une commande séparée et dissymétrique de la position des deux profilés auxiliaires vis-à-vis des ailes.

## Revendications

1. Profilé aérodynamique auxiliaire (2), placé au-dessus de l'extrados d'une aile d'avion (1), en dehors de la couche limite de l'aile, monté sur un système de vérins (4-5-7) permettant de régler l'inclinaison du profilé (2), la distance entre le profilé (2) et l'aile (1) et le déplacement du profilé (2) parallèlement à l'aile (1), caractérisé en ce que le profilé (2) est placé en amont du point de cambrure maximum de l'extrados, ne dépassant pas la bord d'attaque de l'aile, afin d'influencer la position du point de transition le long de l'extrados de l'aile ainsi que l'écoulement des filets d'air autour de l'aile en modifiant les pressions autant en extrados qu'en intrados et en réduisant le couple piqueur de l'aile.

2. Profilé aérodynamique auxiliaire (2) adapté à une aile d'avion (1) selon la revendication 1, caractérisé en ce que le profilé est placé au niveau du point de cambrure maximum de l'extrados.

3. Profilé aérodynamique auxiliaire (2) adapté à une aile d'avion (1) selon les revendications 1 et 2, caractérisé en ce que l'on peut agir suivant les conditions de vol sur un effet plutôt que l'autre.

4. Profilés aérodynamiques auxiliaires adaptés aux ailes d'un avion selon les revendications 1 à 3, caractérisés en ce que leur position vis-à-vis des ailes peut être commandée de façon dissymétrique et indépendante.
